# EUROPÄISCHE PATENTANMELDUNG

(11) **EP 1 000 968 A1**
(43) Veröffentlichungstag der Anmeldung: **17.05.2000**
(21) Anmeldenummer: 99120968.5
(22) Anmeldetag: 03.11.1999
(51) Int. Cl.: C08K 5/39, C08L 21/00

(54) **Styrol-Butadien- und Butadienkautschuke enthaltende vulkanisierbare Kautschukmischungen**

(30) Priorität: 16.11.1998 DE 19852647
(71) Anmelder: Bayer Aktiengesellschaft, 51368 Leverkusen (DE)
(72) Erfinder: Jeske, Winfried, 51399 Burscheid (DE); Buding, Hartmuth, Dr., 52445 Titz (DE); Weidenhaupt, Hermann-Josef, Dr., 50259 Pulheim (DE)

(57) **Zusammenfassung**

Die Erfindung betrifft vulkanisierbare, ein spezielles Vulkanisiersystem enthaltende mit Kieselsäure verstärkte und füllstoffaktivatorhaltige Kautschukmischungen auf Basis von Styrol-Butadien-Kautschuk für Reifenlaufflächen mit verbessertem Abriebwiderstand.

## Beschreibung

Die vorliegende Erfindung betrifft vulkanisierbare Kautschukmischungen, enthaltend u.a. einen in Lösung und/oder in Emulsion hergestellten Styrol-Butadien-Kautschuk, einen Butadienkautschuk, gegebenenfalls Naturkautschuk und/oder synthetischen cis-Isoprenkautschuk, Füllstoffe sowie ein spezielles Vulkanisiersystem. Darüber hinaus betrifft die Erfindung die Verwendung der Kautschukmischungen zur Herstellung von Reifen, insbesondere Reifenlaufflächen.

Es ist dem Fachmann bekannt, dass die bei einem Reifen angestrebten Eigenschaften, wie niedriger Rollwiderstand, niedriger Abrieb und hohe Naßrutschfestigkeit gleichzeitig sich nur schwer miteinander vereinen lassen, da diese Eigenschaften teilweise einander entgegenstehen. So wird z.B. durch den teilweisen oder völligen Ersatz von Ruß durch Kieselsäure als Füllstoff zwar der Rollwiderstand des Reifens erniedrigt, gleichzeitig aber auch seine Abriebfestigkeit.

Es hat deshalb nicht an Versuchen gefehlt, bei der Herstellung von Reifen den Rollwiderstand zu erniedrigen ohne dabei gleichzeitig die Abriebfestigkeit ebenfalls zu erniedrigen. Zur Lösung dieses Problems, nämlich den Rollwiderstand zu erniedrigen ohne dabei gleichzeitig auch die Abriebfestigkeit zu erniedrigen, wird in EP 0 501 227 vorgeschlagen, in Lösung hergestellten Styrol-Butadien-Kautschuk (L-SBR) in Kombination mit einer speziellen Kieselsäure und einem Füllstoffaktivator zu verwenden.

Darüber hinaus wird in EP 0 628 597 offenbart, wie man auch mit in Emulsion hergestelltem Styrol-Butadien-Kautschuk (E-SBR), der mit Kieselsäure und einem Füllstoffaktivator verstärkt war, den Rollwiderstand absenken kann, ohne gleichzeitig auch die Abriebfestigkeit zu erniedrigen.

In EP 0 385 072 werden Reifenlaufflächen mit erhöhter Laufleistung auf Basis von Dienkautschuken beschrieben, deren Netzwerkbrücken aus 1,2-Dithioethandiyl-Brücken bestehen. Als mögliche Füllstoffe werden Ruß und Kieselsäure genannt. In dieser Anmeldung wird außerdem ausdrücklich darauf hingewiesen, dass die C₂-Vernetzungsbrücke anderen Vernetzungsbrücken, wie C₆- oder C₈-Vernetzungsbrücken, insbesondere in der Vernetzungsausbeute überlegen ist. Außerdem wird darauf hingewiesen, dass die zusätzliche Verwendung von Schwefel in der Regel keine Vorteile ergibt, da das Reversionsverhalten deutlich verschlechtert wird (vgl. Seite 4, Zeilen 11 bis 13 und Seite 4, Zeilen 27-28).

Darüber hinaus wird in EP 0 432 417 ein Verfahren zur Herstellung von Reifenlaufflächen mit erhöhter Laufleistung auf Basis von Polydienkautschuken und Zuschlagstoffen unter Einsatz von C₂-Vernetzungsbrücken-bildenden Vernetzersysteme beschrieben, wobei insbesondere darauf hingewiesen wird, dass die zusätzliche Vernetzung mit Schwefel in der Regel keine Vorteile bringt, da das Reversionsverhalten verschlechtert wird (vgl. Seite 5, Zeilen 14-15).

Außerdem wird in EP 0 530 590 ein Verfahren zur Herstellung von Dienkautschukvulkanisaten offenbart, die neben Schwefel und Mercaptobeschleuniger oder Sulfenamidbeschleuniger oder Mercaptobeschleuniger und Sulfenamidbeschleuniger auch C₆- oder C₂-Vernetzungsbrücken-bildende schwefelhaltige Vernetzungsagentien enthalten.

EP 0 385 073 beschreibt vulkanisierte Seitenwände von Kraftfahrzeugreifen auf Basis von Polydienkautschuken mit C₂- bis C₆-Dithioalkandiyl-Brücken als Netzwerkbrücken. Auch in EP 0 432 405 werden vulkanisierte Seitenwände von Kraftfahrzeugreifen auf Basis von Polydienkautschuken mit C₂- bis C₆-Dithioalkandiyl-Brücken als Netzwerkbrücken beschrieben. Darüber hinaus ist aus DE 22 56 511 und DE 22 65 382 die Verwendung von Verbindungen der allgemeinen Formel A-S-S-R-S-S-A' zur Vulkanisation von Kautschuken beschrieben, wobei R der Formel ein beliebiger zweiwertiger organischer Rest und A und A' eine große Anzahl von Beschleunigerresten, u.a. auch N-substituierte Thiocarbamoylreste, darstellen. Es werden in den genannten deutschen Patentanmeldungen Vulkanisate mit Ruß und Siliciumdioxid als Füllstoff beschrieben, jedoch nicht die Kombination mit Füllstoffaktivatoren.

Die in den genannten Patentveröffentlichungen beschriebenen Kautschukmischungen bzw. Vulkanisate bedürfen jedoch noch einer weiteren Optimierung bezüglich der Eigenschaften, wie niedriger Rollwiderstand, niedriger Abrieb und hohe Naßrutschfestigkeit, die im Reifenbau besonders von Bedeutung sind.

Aufgabe der vorliegenden Erfindung ist es daher, vulkanisierbare Kautschukmischungen für die Herstellung von Reifenlaufflächen mit vor der Alterung verbessertem Abriebwiderstand auf Basis von mit Kieselsäuren in Kombination mit Füllstoffaktivatoren verstärktem Styrol-Butadien-Kautschuk (SBR) bereitzustellen, ohne dass dabei gleichzeitig der Rollwiderstand und die Naßrutschfestigkeit der Reifenlauffläche verschlechtert wird.

Die Aufgabe wurde überraschenderweise gelöst durch die Bereitstellung von vulkanisierbaren, kieselsäure- und füllstoffaktivatorhaltigen Kautschukmischungen auf Basis von SBR mit einem speziellen C₆-Brücken-liefernden Vernetzer in Kombination mit einer ausgewählten Menge an Schwefel und bestimmten Vulkanisationsbeschleunigern. Weiter wurde überraschend gefunden, dass die erfindungsgemäßen Kautschukmischungen im Falle der Anwendung von L-SBR bei einer nicht verschlechterten Vearbeitungssicherheit im Vergleich zu Kautschukmischungen nach Stand der Technik zusätzlich noch eine verkürzte Ausvulkanisationszeit (Steigerung der Produktivität) aufweisen, und dass die diesbezüglichen Vulkanisate eine höhere Rückprallelastizität aufweisen als die Vulkanisate nach Stand der Technik.

Gegenstand der Erfindung sind daher vulkanisierbare Kautschukmischungen enthaltend a) 20 bis 90 Gew.-Teile, bevorzugt 40 bis 85 Gew.-Teile, eines in Lösung und/oder in Emulsion hergestellten Styrol-Butadien-Kautschuks (SBR), b) 10 bis 50 Gew.-Teile, bevorzugt 20 bis 40 Gew.-Teile, eines Butadienkautschuks (BR), c) 0 bis 40 Gew.-Teile, bevorzugt 0 bis 30 Gew.-Teile, Naturkautschuk und/oder eines synthetischen cis-Isoprenkautschuks (IR), d) 40 bis 90 Gew.-Teile, bevorzugt 60 bis 90 Gew.-Teile, Kieselsäure in Kombination mit einem Füllstoffaktivator und e) übliche Zusätze, dadurch gekennzeichnet, dass das Vulkanisiersystem aus
α) 0,5 bis 3,5 Gew.-Teile der Verbindung (I)

   (H₅C₆-CH₂)₂N - (C=S) - S - S - (CH₂)₆ - S -S - (C=S) - N(CH₂-C₆H₅)₂ (I)
β) 0,3 bis 1,5 Gew.-Teile Schwefel,
γ) 1 bis 3 Gew.-Teile Benzothiazyl-2-cyclohexylsulfenamid (CBS) und/oder N-tert.-Butyl-2-benzothiazylsulfenamid (TBBS) und
δ) 0,5 bis 4 Gew.-Teile N,N'-Diphenylguanidin (DPG)
besteht, wobei die Gew.-Teile auf 100 Gew.-Teile Kautschuk bezogen sind.

Als Styrol-Butadien-Kautschuke (SBR) für die erfindungsgemäßen Kautschukmischungen kommen in Frage ein in Lösung hergestellter SBR (L-SBR) mit einem Styrol-Gehalt von 10 bis 35 Gew.-Teilen, bevorzugt 15 bis 30 Gew.-Teilen, und einem Vinyl-Gehalt von 10 bis 60 Gew.-Teilen, bevorzugt 18 bis 60 Gew.-Teilen, und einer Glastemperatur (T_{g}), bestimmt mittels DSC, von -80° bis -10°C, bevorzugt von -70° bis -20°C, und/oder ein in Emulsion hergestellter SBR (E-SBR) mit einem Styrol-Gehalt von 15 bis 45 Gew.-Teilen, bevorzugt 20 bis 40 Gew.-Teilen, und einem Vinyl-Gehalt von 10 bis 18 Gew.-Teilen, und einer T_{g}, bestimmt mittels DSC, von -60° bis -25°C, bevorzugt von -50° bis -30°C, wobei sich die angegebenen Gew.-Teile auf jeweils 100 Gew.-Teile Copolymerkautschuk beziehen.

Als Butadienkautschuk (BR) für die erfindungsgemäßen Kautschukmischungen kommt ein BR in Frage mit einem cis-1,4-Gehalt von 30 bis 100 Gew.-Teilen, bevorzugt von 90 bis 100 Gew.-Teilen, je 100 Gew.-Teilen dieses Kautschuks.

SBR und BR können unverstreckt oder auch ölverstreckt eingesetzt werden. Üblicherweise kann der Gesamtölgehalt der Kautschukmischung zwischen 25 bis 45 Gew.-Teilen liegen, bezogen auf 100 Gew.-Teile Kautschuk.

Als Naturkautschuk (NR) für die erfindungsgemäßen Kautschukmischungen sind die üblicherweise in der Reifenindustrie eingesetzten NR-Typen geeignet, als Isoprenkautschuk (IR) kommen synthetisch aus Isopren hergestellte Produkte mit einem cis-1,4-Gehalt von größer 90 Gew.-Teilen, insbesondere von größer 95 Gew.-Teilen, je 100 Gew.-Teile dieses Kautschuks in Frage.

Als verstärkender Füllstoff für die erfindungsgemäßen Kautschukmischungen kommt bevorzugt hochdisperse Kieselsäure in einer Menge von bevorzugt 60 bis 90 Gew.-Teilen in Betracht. Die hochdisperse Kieselsäure wird hergestellt z.B. durch Fällung von Lösungen von Silikaten oder durch Flammhydrolyse von Siliciumhalogeniden und hat eine spezifische Oberfläche von 20 bis 400 m²/g (BET-Oberfläche), bevorzugt 100 bis 250 m²/g, insbesondere 120 bis 200 m²/g, und eine Primärteilchengröße von 10 bis 400 nm.

Als Füllstoffaktivatoren für die erfindungsgemäßen Kautschukmischungen kommen bevorzugt Bis-(trialkoxysilylpropyl)-tetrasulfan und -disulfan sowie 3-(Trialkoxysilyl)-1-propanthiol, wobei der Alkoxy-Rest Methoxy oder Ethoxy bedeutet, sowie Füllstoffaktivatoren beschrieben in DE 44 35 311 in Einsatzmengen von 2 bis 20 Gew.-Teilen, bevorzugt 3 bis 10 Gew.-Teilen, insbesondere 4 bis 8 Gew.-Teilen, jeweils berechnet als 100%iger Wirkstoff und bezogen auf 100 Gew.-Teile Kautschuk, in Frage. Es können aber auch Mischungen aus diesen Füllstoffaktivatoren eingesetzt werden. Flüssige Füllstoffaktivatoren können zur besseren Dosier- und/oder Dispergierbarkeit auf einem Träger aufgezogen sein (dry liquids). Als Träger kommen Ruße und Kieselsäuren in Frage. Bevorzugt wird aktiver oder hochaktiver Ruß verwendet. Der Wirkstoffgehalt des dry liquids liegt zwischen 30 und 70 Gew.-Teilen, bevorzugt zwischen 40 und 60 Gew.-Teilen je 100 Gew.-Teilen dry liquid.

Die C₆-Dithioalkandiyl-Brücken-liefernde Verbindung (I) wird bevorzugt in Mengen von 0,8 bis 2,5 Gew.-Teilen eingesetzt. Als Schwefel kommt der üblicherweise in der kautschukverarbeitenden Industrie verwendete Schwefel oder auch unlöslicher Schwefel in Frage. Die bevorzugte Menge an Schwefel beträgt 0,5 bis 1,0 Gew.-Teile. Benzothiazyl-2-cyclohexylsulfenamid (CBS) und/oder N-tert.-Butyl-2-benzothiazylsulfenamid (TBBS) werden insbesondere in Mengen von 1,5 bis 2,5 Gew.-Teilen eingesetzt. Ganz besonders bevorzugt ist die alleinige Verwendung von CBS als Hauptbeschleuniger. Als Zweitbeschleuniger wird N,N'-Diphenylguanidin (DPG) bevorzugt in Mengen von 1 bis 3 Gew.-Teilen, insbesondere in Mengen von 1,5 bis 2,5 Gew.-Teilen der Mischung zugegeben. Alle hier angegebenen Gew.-Teile sind auf 100 Gew.-Teile Kautschuk bezogen.

Die Synthese der C₆-Dithioalkandiyl-Brücken-liefernde Verbindung (I) kann in üblicher Weise gemäß der Beschreibung in EP 0 432 405 erfolgen.

Die Herstellung der erfindungsgemäßen Kautschukmischungen erfolgt in an sich bekannter Weise durch Vermischen der Kautschukkomponenten in geeigneten Mischungsaggregaten unter Zugabe von üblichen Zusätzen wie Weichmacher, Alterungsschutzmittel, Zinkoxid, Stearinsäure, Harzen, Verarbeitungshilfsmitteln (siehe z.B. W. Hoffmann, Rubber Technology Handbook, Hanser-Verlag, 1989) in den bekannten Mengen, die vom jeweiligen Verwendungszweck der Kautschukmischungen abhängen.

Die erfindungsgemäßen Kautschukmischungen können in bekannter Weise bei Temperaturen von 120 bis 220°C, bevorzugt 140 bis 200°C vulkanisiert werden.

Die erfindungsgemäßen Kautschukmischungen können zur Herstellung von Reifen, insbesondere zur Herstellung von Reifenlaufflächen verwendet werden.

### Beispiele

### Erläuterungen zum experimentellen Teil

Folgende Testmethoden bzw. Testvorrichtungen wurden benützt: Mooney-Viskosität: DIN 53 523, großer Rotor, 100°C, Vorwärmzeit 1 min., Testzeit 4 min. Mooney-Anvulkanisation: DIN 53 523, großer Rotor, 130°C, Vorwärmzeit 1 min. Rheometer: ASTM D 2084, Monsanto MDR 2000 E, 170°C. Zugversuch: DIN 53 405, S2-Stab. Härte: DIN 53 505. Rückprallelastizität: DIN 53 512. Viskoelastische Eigenschaften: DIN 53 513/ISO 4664, Roelig-Test, 10 Hz.

### Durchführung der Versuche

Mit Hilfe eines Innenmischers vom Typ GK 1,5 E der Firma Werner & Pfleiderer wurden bei einer Rotordrehzahl von 70 upm und einer Kammer- und Schaufeltemperatur von 80°C (Stempeldruck 8 bar, Füllgrad 65%) Testmischungen gemäß Tabelle 1 hergestellt. Die Mengenangaben stellen Gew.-Teile pro 100 Gew.-Teile Kautschuk dar.

**Table 1**

| Testrezeptur | | | | |
|---|---|---|---|---|
| | Vergleich | Erfindung | Vergleich | Erfindung |
| Mischungsnummer | 1 | 2 | 3 | 4 |
| | | | | |
| E-SBR ^{a)} | | | 103 | 103 |
| S-SBR ^{b)} | 103 | 103 | | |
| Br ^{c)} | 25 | 25 | 25 | 25 |
| Kieselsäure ^{d)} | 70 | 70 | 70 | 70 |
| Füllstoffaktivator ^{e)} | 6 | 6 | 6 | 6 |
| Ruß N234 | 6 | 6 | 6 | 6 |
| Weichmacher ^{f)} | 8 | 8 | 8 | 8 |
| 6PPD ^{g)} | 1,5 | 1,5 | 1,5 | 1,5 |
| TMQ ^{h)} | 1,5 | 1,5 | 1,5 | 1,5 |
| Zinkoxid | 3 | 3 | 3 | 3 |
| Stearinsäure | 2 | 2 | 2 | 2 |
| CBS ⁱ⁾ | 1,8 | 1,8 | 1,8 | 1,8 |
| DPG ^{k)} | 2 | 2 | 2 | 2 |
| Schwefel | 1,5 | 0,5 | 1,5 | 0,5 |
| Verbindung (I) | 0 | 1 | 0 | 1 |

| | | | | |
|---|---|---|---|---|
| ^{a)} Krynol® 1721 der Bayer AG, Leverkusen, Germany, mit 37,5 Gew.-Teilen hocharomatischen Mineralöl, gebundenes Styrol: 40,0%, Mooney-Viskosität ML (1+4) 100°C = 54 | | | | |
| ^{b)} Buna® VSL 5025-1 der Bayer AG, Leverkusen, Germany, Vinyl-Gehalt: 50%, Styrol-Gehalt: 25%, Öl-Gehalt: 37,5%, Mooney-Viskosität ML(1+4) 100°C = 50 | | | | |
| ^{c)} Buna® CB 25 der Bayer AG, Leverkusen, Germany, cis-1,4-Gehalt: min. 96%, Mooney-Viskosität ML (1+4) 100°C = 44 | | | | |
| ^{d)} Vulkasil® S der Bayer AG, Leverkusen, Germany, BET-Oberfläche: 155-195 m²/g, pH-Wert: 5,4-7,0 | | | | |
| ^{e)} Verstärkungsadditiv Si 69 (Bis-(triethixysilylpropyl)-tetrasulfan) der Degussa AG, Frankfurt, Germany | | | | |
| ^{f)} Renopal® 450 (aromatisches Mineralöl) der Firma Fuchs Mineralölwerke GmbH, Mannheim, Germany | | | | |
| ^{g)} Vulkanox® 4020/LG (N-1,3-Dimethylbutyl)-N'-phenyl-p-phenylendiamin) der Bayer AG, Leverkusen, Germany | | | | |
| ^{h)} Vulkanox® HS/LG (2,2,4-Trimethyl-1,2-dihydrochinolin, polymerisiert) der Bayer AG, Leverkusen, Germany | | | | |
| ⁱ⁾ Vulkacit® CZ/C (Benzothiazyl-2-cyclohexylsulfenamid, CBS) der Bayer AG, Leverkusen, Germany | | | | |
| ^{k)} Vulkacit® D/C (N,N'-Diphenylguanidin) der Bayer AG, Leverkusen, Germany | | | | |

Die Mischfolge für die Herstellung der Mischungen wurde, wie nachstehend beschrieben, gewählt:
- t = 0 sec: Zugabe Polymere
- t = 10 sec: Stempel ab
- t = 60 sec: Stempel auf, Zugabe der jeweils halben Menge an Kieselsäure und Füllstoffaktivator, Stempel ab
- t = 120 sec: Stempel auf, Zugabe der restlichen Menge an Kieselsäure und Füllstoffaktivator, Zugabe Ruß, Weichmacher, Zinkoxid, Stearinsäure, 6PPD und TMQ, Stempel ab
- t = 240 sec: fegen
- t = 300 sec: auswerfen

Die Mischguttemperaturen lagen beim Entleeren des Kneters im Bereich von 148°

Das Vulkanisiersystem, bestehend aus Schwefel, CBS, DPG und Verbindung (I), wurde auf der Walze bei einer Mischungstemperatur von ca. 60°C eingemischt.

Die ermittelten rheologischen Daten der fertig gemischten Kautschukmischungen sind in Tabelle 2 zusammengefaßt.

**Tabelle 2**

| Rheologische Daten der Testmischungen | | | | |
|---|---|---|---|---|
| | Vergleich | Erfindung | Vergleich | Erfindung |
| Mischungsnummer | 1 | 2 | 3 | 4 |
| ML (1+4) 100°C (ME) | 77 | 79 | 60 | 58 |
| Anvulkanisationszeit (130°C) t₅ (min) | 19,6 | 20,2 | 22,2 | 26,1 |
| ts01 (min) | 0,8 | 0,9 | 1,2 | 1,4 |
| t95(min) | 10,3 | 6,5 | 7,4 | 7,9 |
| S'min (dNm) | 3,7 | 4,0 | 2,9 | 2,7 |
| S'max (dNm) | 24,7 | 23,3 | 24,2 | 23,3 |
| S'end, 30 min (dNm) | 24,7 | 23,2 | 22,4 | 22,5 |

Die Prüfergebnisse der Vulkanisate, welche aus den erfindungsgemäßen Kautschukmischungen hergestellt wurden, sind in Tabelle 3 zusammengefaßt. Die Vulkanisation der Kautschukmischungen erfolgte bei einer Temperatur von 170°C während einer Zeit von t95+5 min.

**Tabelle 3**

| Eigenschaften der Testvulkanisate | | | | |
|---|---|---|---|---|
| | Vergleich | Erfindung | Vergleich | Erfindung |
| Mischungsnummer | 1 | 2 | 3 | 4 |
| Festigkeit (MPa) | 18,4 | 19,0 | 23,7 | 24,4 |
| Bruchdehnung (%) | 445 | 470 | 555 | 560 |
| Modul 100 (MPa) | 2,9 | 2,7 | 2,4 | 2,3 |
| Modul 300 (MPa) | 10,8 | 10,1 | 9,9 | 10,3 |
| Härte, 23°C (Shore A) | 68 | 69 | 68 | 68 |
| Härte, 70°C (Shore A) | 66 | 66 | 64 | 64 |
| Rückprallelastizität, 23°C (%) | 28 | 30 | 28 | 28 |
| Rückprallelastizität, 70°C (%) | 47 | 50 | 48 | 49 |
| Abrieb, Schmiergel 40 (mm³) | 159 | 137 | 141 | 107 |
| Abrieb, Schmiergel 60 (mm³) | 102 | 81 | 81 | 70 |
| tan δ, 0°C | 0,444 | 0,423 | 0,448 | 0,448 |
| Dyn. Modul E', 0°C (MPa) | 22,5 | 23,8 | 26,0 | 23,3 |
| Verlust-Modul E'', 0°C (MPa) | 10,0 | 10,2 | 11,7 | 10,4 |
| tan δ, 60°C | 0,129 | 0,130 | 0,141 | 0,136 |
| Dyn. Modul E', 60°C (MPa) | 8,2 | 8,4 | 9,6 | 9,2 |
| Verlust-Modul E'', 60°C (MPa) | 1,1 | 1,1 | 1,4 | 1,2 |

Die erfindungsgemäßen Beispiele lehren, dass mit den erfindungsgemäßen Kautschukmischungen Vulkanisate mit niedrigerem Abrieb erhalten werden können, ohne dass gleichzeitig der tan δ bei 0°C, der mit der Naßrutschfestigkeit einer Reifenlauffläche korreliert, und der tan δ bei 60°C, der mit dem Rollwiderstand einer Reifenlauffläche korreliert, verschlechtert wird. Ein niedriger Abrieb ist synonym mit einem hohen Abriebwiderstand.

## Patentansprüche

1. Vulkanisierbare Kautschukmischungen enthaltend a) 20 bis 90 Gew.-Teile eines in Lösung und/oder in Emulsion hergestellten Styrol-Butadien-Kautschuks, b) 10 bis 50 Gew.-Teile eines Butadienkautschuks, c) 0 bis 40 Gew.-Teile Naturkautschuk und/oder eines synthetischen cis-Isoprenkautschuks, d) 40 bis 90 Gew.-Teile Kieselsäure in Kombination mit einem Füllstoffaktivator und e) übliche Zusätze, dadurch gekennzeichnet, dass das Vulkanisiersystem aus
α) 0,5 bis 3,5 Gew.-Teile der Verbindung (I)
(C₆H₅-CH₂)₂N - (C=S) - S - S - (CH₂)₆ - S - S - (C=S) - N(CH₂-C₆H₅)₂ (I)
β) 0,3 bis 1,5 Gew.-Teile Schwefel,
γ) 1 bis 3 Gew.-Teile Benzothiazyl-2-cyclohexylsulfenamid und/oder N-tert.-Butyl-2-benzothiazylsulfenamid und
δ) 0,5 bis 4 Gew.-Teile N,N'-Diphenylguanidin
besteht, wobei die Gew.-Teile auf 100 Gew.-Teile Kautschuk bezogen sind.

2. Verwendung der Kautschukmischungen nach Anspruch 1 zur Herstellung von Reifen, insbesondere zur Herstellung von Reifenlaufflächen.
